# EUROPÄISCHE PATENTSCHRIFT

(11) **EP 1 270 282 B1**
(45) Veröffentlichungstag und Bekanntmachung des Hinweises auf die Patenterteilung: **05.09.2007**
(21) Anmeldenummer: 02013666.9
(22) Anmeldetag: 20.06.2002
(51) Int. Cl.: B60G 9/00, B60G 7/00, B60B 35/02

(54) **Achsverbund eines Nutzfahrzeuges**
Composite axle of a commercial vehicle
Essieu composite d'un véhicule utilitaire

(30) Priorität: 26.06.2001 DE 10130635
(43) Veröffentlichungstag der Anmeldung: 02.01.2003
(73) Patentinhaber: MAN Nutzfahrzeuge Aktiengesellschaft, 80976 München (DE)
(72) Erfinder: Beck, KLaus, Dipl.-Ing., 82216 Gernlinden (DE); Übelacker, Andreas, Dipl-Ing., 82282 Unterschweinbach (DE); Stummer, Josef, Dipl.-Ing., 85716 Unterschleissheim (DE)

(56) Entgegenhaltungen:
- EP-A- 0 940 320
- DE-U- 29 713 996
- US-A- 5 046 756

## Beschreibung

Die Erfindung betrifft einen Achsverbund eines Nutzfahrzeuges, mit einem luftgefederten, lenkbare Räder tragenden Achskörper gemäß dem Oberbegriff des Anspruches 1.

Aus der DE 297 13 996 U1 ist eine Vorrichtung zur Verbindung des Achskörpers einer Radachse eines Nutzfahrzeuges mit den Längslenkern einer Achsabstützung bekannt, bei dieser zwischen dem Achskörper und den Längslenkern jeweils ein Stützkörper vorgesehen ist. Die Längslenker und der Achskörper sind durch Spannglieder miteinander verspannt, wobei die Längslenker und die Stützkörper über Zwischenglieder in gegenseitigem, formschlüssigem Eingriff stehen. Als Zwischenglieder sind hierbei mehrere, in komplementären Keilnuten eingreifende Keilglieder vorgesehen, welche rippenförmig entlang den Längslenker verlaufen und sich über einen Großteil der lenkerparallelen Abmessung der Stützkörper erstrecken. Die Keilglieder können einen integralen Bestand der Stützkörper oder der Längslenker bilden.

Aus EP-A-0940320 ist eine Vorrichtung nach dem Oberbegriff des Anspruchs 1 bekannt.

Es ist Aufgabe der Erfindung, einen Achsverbund eines Nutzfahrzeuges hinsichtlich seines Montageaufwandes und seiner Festigkeit zu optimieren.

Diese Aufgabe wird erfindungsgemäß durch die Merkmale des Anspruches 1 gelöst.

Durch die erfindungsgemäße Lösung ist ein Achsverbund eines Nutzfahrzeuges gegeben, dessen luftgefederter, lenkbare Räder tragender Achskörper in Fahrzeuglängsrichtung durch Längslenker abgestützt ist. Der Achskörper besitzt eine Portalgestalt mit je Fahrzeugseite einem Vertikalabsatz, dessen Flanke jeweils ein integrales Verbindungsglied aufweist. Dieses integrale Verbindungsglied des Achskörpers korrespondiert zumindest formschlüssig innerhalb eines gemeinsamen Überlappungsbereiches von Achskörper und Längslenker, mit jeweils einem am Längslenker vorgesehenen integralen Verbindungsglied. Hierbei sind im Überlappungsbereich von Achskörper und Längslenker miteinander korrespondierende Bohrungen angeordnet, die zur Aufnahme von Achskörper und Längslenker lösbar miteinander verbindender Schraubverbindungen vorgesehen sind.

Durch spezielle Ausgestaltung von Achskörper und Längslenker ist demnach eine kompakte Einspannung von Längslenker am Achskörper ohne Verwendung zusätzlicher Bauteile gegeben. Die unter Formschluss selbststabilisierend miteinander verbundenen Längslenker und Achskörper sind zusätzlich durch die Schraubverbindungen miteinander verbunden. Infolge des Verzichtes auf ansonsten erforderliche, zusätzliche Adapterbauteile zwischen Längslenker und Achskörper kann der Achsverbund hinsichtlich seines baulichen Aufwandes in vorteilhafter Weise einfach und kompakt gehalten werden. Des weiteren ist durch die spezielle Gestaltung von Achskörper und Längslenker sowie deren Anordnung zusätzlicher Bauraum gewonnen, wodurch die Anordnung eines gestaltoptimierten Panhardstabes anordnungsmäßig günstig gegeben ist. Des weiteren ist durch formschlüssige Einspannung der Längslenker am Achskörper eine ideale, wechselbelastungsunabhängige Verbindung beider Bauteile gegeben. Es ist somit kein Spiel zwischen Achskörper und Längslenker gegeben und daher ein Ausschlagen der Achse wirksam unterbunden. Des weiteren kann durch die erfindungsgemäße Ausführung des Achsverbundes ein Stabilisator eingespart werden.

Gemäß einer weiteren Ausgestaltung der Erfindung können die an den Flanken der Vertikalabsätze des Achskörpers und an den Längslenkern vorgesehenen integralen Verbindungsglieder durch jeweils formschlüssig miteinander korrespondierende Aufnahmenuten und Einpassprofile gegeben sein, die entweder an den Flanken des Achskörpers oder an den Längslenkern gebildet sind. Die die integralen Verbindungsglieder zumindest teilweise bildenden Flanken an den Vertikalabsätzen des Achskörpers können entweder fahrzeugaußenseitig oder fahrzeuginnenseitig dieser Vertikalabsätze gebildet sein. Die an den Längslenkern gebildeten integralen Verbindungsglieder sind dementsprechend außen- oder innenseitig der Längslenker angeordnet.

Gemäß einer weiteren Ausgestaltung der Erfindung können die an den Flanken des Achskörpers und an den Längslenkern vorgesehenen integralen Verbindungsglieder durch jeweils formschlüssig miteinander korrespondierende Keilvertiefungen und Keilnasen (Keilerhebungen) gegeben sein, die entweder an den Flanken des Achskörpers oder an den Längslenkern ausgebildet sind. Die entweder an den Flanken des Achskörpers oder an den Längslenkern vorgesehenen Keilvertiefungen können beispielsweise gruppenweise in bestimmten Keilfeldern zusammengefasst sein. Die mit den Keilvertiefungen formschlüssig korrespondierenden Keilnasen (Keilerhebungen) können an den Innen- oder Außenseiten der Längslenker oder an Außen- oder Innenseiten der Flanken des Achskörpers vorgesehen und entsprechend der Keilvertiefungen ebenfalls in Keilfeldern zusammengefasst sein.

Gemäß einer weiteren Ausgestaltung der Erfindung kann jede am Achskörper oder am Längslenker gebildete Aufnahmenut in ihrem Nutgrund an einer am Längslenker oder am Achskörper gebildeten Anlagekontur anliegen.

Gemäß einer weiteren Ausgestaltung der Erfindung können die Anlagekonturen von Achskörper und Längslenker zusätzliche, formschlüssig miteinander korrespondierende Anlageprofile aufweisen, die durch Eintiefungen und Abragungen entweder am Achskörper oder am Längslenker gegeben sind.

Gemäß einer weiteren Ausgestaltung der Erfindung kann die am Achskörper oder am Längslenker gebildete Aufnahmenut horizontal verlaufende Nutflanken aufweisen, zwischen diesen eine obere und eine untere Anlageflanke des Längslenkers oder des Achskörpers formschlüssig zur Anlage kommt.

Gemäß einer weiteren Ausgestaltung der Erfindung kann der Verlauf der am Längslenker oder am Achskörper gebildeten oberen und unteren Anlageflanke durch wenigstens eine Eindrückung unterbrochen sein.

Gemäß einer weiteren Ausgestaltung der Erfindung können die Längslenker in ihrer Längsrichtung im wesentlichen durch ein Hochkantprofil profiliert sein.

Gemäß einer weiteren Ausgestaltung der Erfindung können es Endbereiche der Längslenker sein, welche am Vertikalabsatz des Achskörpers formschlüssig und lösbar mittels Schraubverbindungen befestigt sind.

Gemäß einer weiteren Ausgestaltung der Erfindung können die Endbereiche der Längslenker gegenüber ihrem Hochkantprofil leicht gekröpft und verdickt ausgeführt sein und fahrzeugeinwärts oder fahrzeugauswärts gerichtet die integralen Verbindungsglieder aufweisen.

Gemäß einer weiteren Ausgestaltung der Erfindung können an den Hochkantprofilen der Längslenker Stoßdämpferhalter mittels Schraubverbindungen befestigt sein.

Gemäß einer weiteren Ausgestaltung der Erfindung können der Achskörper und die Längslenker Vollquerschnitte aufweisen. Des weiteren können der Achskörper und die Längslenker durch Schmiede- oder Gussteile gegeben sein.

Gemäß einer weiteren Ausgestaltung der Erfindung kann der Achskörper stirnseitig an einer ersten Fahrzeugseite eine Panhardstabanbindung aufweisen.

Gemäß einer weiteren Ausgestaltung der Erfindung kann der Achskörper stirnseitig an einer zweiten Fahrzeugseite eine Wegsensoranbindung aufweisen.

Gemäß einer weiteren Ausgestaltung der Erfindung kann der Achskörper endseitig jeweils eine Achsschenkelaufnahme und eine Wagenheberaufnahme aufweisen.

Gemäß einer weiteren Ausgestaltung der Erfindung kann der Achskörper endseitig jeweils eine oberseitig an diesem angeordnete Luftfederanbindung aufweisen.

Gemäß einer weiteren Ausgestaltung der Erfindung kann der Achskörper in seinem Mittelabschnitt niveautiefer als in seinen Endabschnitten ausgeführt sein. Des weiteren können die die Verbindungsglieder zumindest teilweise bildenden Flanken an den Vertikalabsätzen des Achskörpers entweder fahrzeugaußenseitig oder fahrzeuginnenseitig orientiert angeordnet sein.

Gemäß einer weiteren Ausgestaltung der Erfindung kann der Achskörper im Bereich seiner Endabschnitte von den Längslenkern untergriffen sein.

Nachstehend ist die erfindungsgemäße Lösung anhand in der Zeichnung dargestellter weiterer Ausführungsbeispiele näher erläutert.

In der Zeichnung zeigen:
- Fig. 1: eine erste Ausführungsvariante eines Achsverbundes eines Nutzfahrzeuges von unten gesehen,
- Fig. 2: in perspektivischer Darstellung von schräg unten gesehen einen Achsverbund gemäß Fig. 1,
- Fig. 3: in perspektivischer Darstellung von schräg vorne gesehen einen Achskörper eines Achsverbundes gemäß Fig. 1,
- Fig. 4: in perspektivischer Darstellung von schräg vorne gesehen einen Längslenker eines Achsverbundes gemäß Fig. 1,
- Fig. 5: ausschnittsweise eine zweite Ausführungsvariante eines Achsverbundes in räumlicher Darstellung von schräg unten gesehen,
- Fig. 6: ausschnittsweise einen Längslenker eines Achsverbundes gemäß Fig. 5,
- Fig. 7: ausschnittsweise und in Seitenansicht einen Achskörper eines Achsverbundes gemäß Fig. 5 und
- Fig. 8: in Seitenansicht einen Achsverbund gemäß Fig. 5.

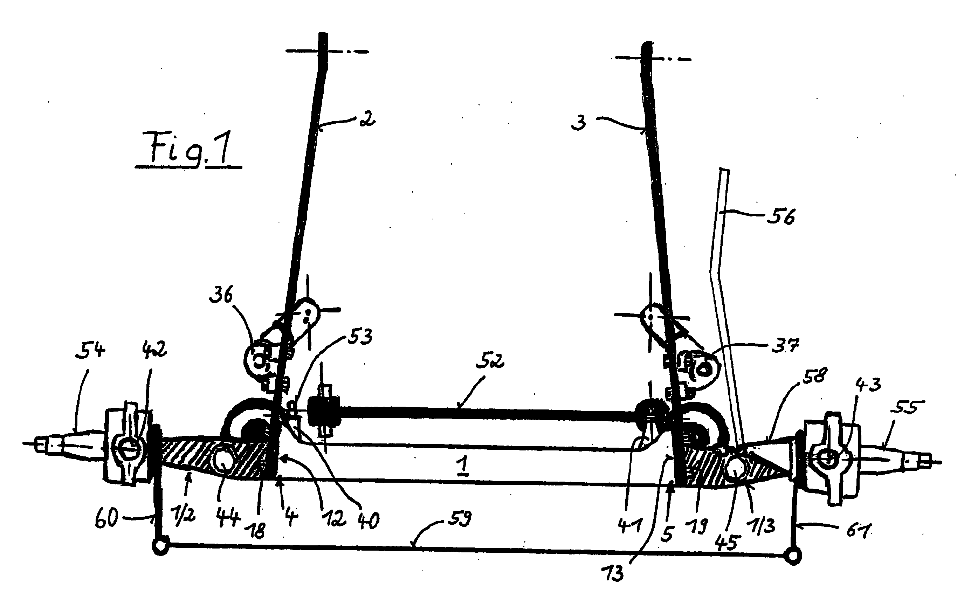

In Fig. 1 ist von unten gesehen eine erste Ausführungsvariante eines Achsverbundes eines Nutzfahrzeuges gezeigt. Der Achsverbund ist mit einem luftgefederten, lenkbare Räder tragenden Achskörper 1 ausgestattet, welcher in Fahrzeuglängsrichtung durch Längslenker 2, 3 abgestützt ist. Der Achskörper 1 weist in dieser Ausführungsversion eine Portalgestalt mit einem niveautieferen Mittelabschnitt 1/1 und mit je Fahrzeugseite einem niveauhöheren Endabschnitt 1/2, 1/3 auf. Der Achskörper 1 weist im Übergang vom Mittelabschnitt 1/1 und seinen Endabschnitten 1/2, 1/3 jeweils einen Vertikalabsatz 4, 5 auf, dessen Außenflanke 6, 7 jeweils ein integrales Verbindungsglied 8, 9, 10, 11 besitzt.

In dem in Fig. 1 bis Fig. 4 gezeigten Ausführungsbeispiel sind die an den Außenflanken 6, 7 des Achskörpers 1 und an den Längslenkern 2, 3 gegebenen Verbindungsglieder 8, 9, 10, 11 durch jeweils formschlüssig miteinander korrespondierende Aufnahmenuten 8, 9 und Einpassprofile 10, 11 realisiert. Hierbei sind die Aufnahmenuten 8, 9 an den Außenflanken 6, 7 des Achskörpers 1 und die Einpassprofile 10, 11 innenseitig der Längslenker 2, 3 vorgesehen. Alternativ hierzu ist es möglich, die Aufnahmenuten 8, 9 innenseitig oder außenseitig an den Längslenkern 2, 3 und die mit diesen formschlüssig korrespondierenden Einpassprofile 10, 11 an Außenflanken 6, 7 oder Innenflanken des Achskörpers 1 vorzusehen.

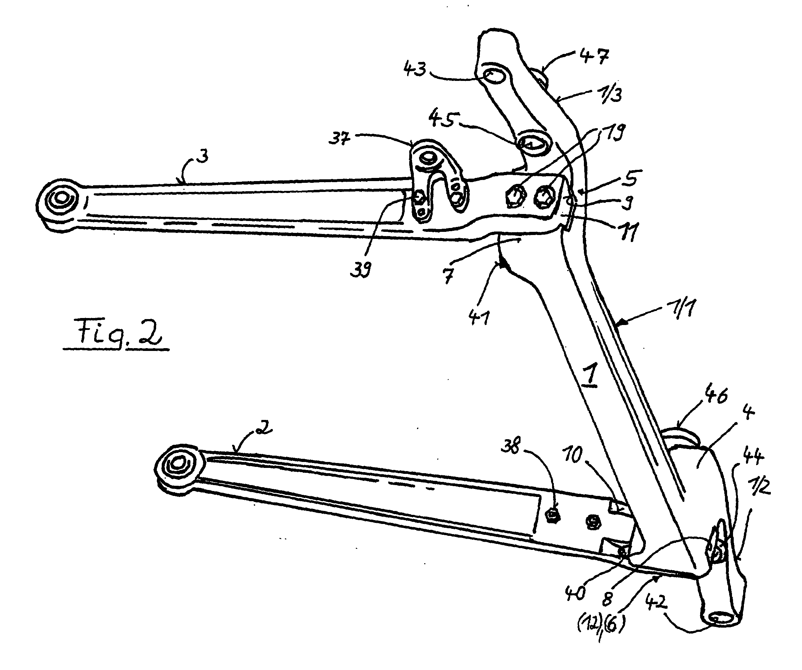

Die Längslenker 2, 3 sind an den Außenflanken 6, 7 des Achskörpers 1 mit diesem in einem gemeinsamen Überlappungsbereich 12, 13 von Achskörper 1 und Längslenker 2, 3 formschlüssig und mittels Schraubverbindungen 18, 19 (Fig. 2) verbunden. In diesem Ausführungsbeispiel sind es die Endbereiche 20, 21 der Längslenker 2, 3, welche am Vertikalabsatz 4, 5 des Achskörpers 1 formschlüssig und lösbar mittels der Schraubverbindungen 18, 19 befestigt sind. An den Längslenkern 2, 3 ist jeweils ein Stoßdämpferhalter 36, 37 angeordnet.

In einem anderen, hier nicht gezeigten Ausführungsbeispiel können die Längslenker 2, 3 die gemeinsamen Überlappungsbereiche von Längslenker 2, 3 und Achskörper 1 mit ihren Endbereichen 20, 21 überragen. Des weiteren können die Längslenker 2, 3 an hier nicht mit Bezugszeichen versehenen, fahrzeugeinwärts gerichteten Innenflanken der Vertikalabsätze 4, 5 des Achskörpers 1 angeordnet sein.

Unabhängig von der Ausführungsart des Achskörpers 1 tragen die niveauhöher ausgeführten Endabschnitte 1/2 1/3 des Achskörpers 1 Achsschenkelaufnahmen 42, 43, an welchen Achsschenkel 54, 55 gelenkig angebunden sind. Die Achsschenkel 54, 55 sind fest mit Spurstangenhebel 60, 61 verbunden, welche gelenkig an einer gemeinsamen Spurstange 59 angebunden sind.

Des weiteren ist in diesem Ausführungsbeispiel der Achsschenkel 54 starr mit dem Lenkhebel 58 verbunden, welcher endseitig über ein Gelenk mit der Lenkstange 56 in Verbindung steht. Die Endabschnitte 1/2, 1/3 des Achskörpers 1 weisen unterseitig Wagenheberaufnahmen 44, 45 auf. Der Achskörper 1 weist in Fahrtrichtung gesehen stirnseitig seines Vertikalabsatzes 4 eine Panhardstabanbindung 41 zur Befestigung eines Panhardstabes 52 auf. Der hierzu gegenüberliegende Vertikalabsatz 5 des Achskörpers 1 weist in Fahrtrichtung gesehen stirnseitg eine Wegsensoranbindung 40 zur Aufnahme eines Wegsensors 53 auf.

In Fig. 2 ist der Achsverbund mit dem Achskörper 1 und hieran formschlüssig angeschlossener Längslenker 2, 3 in Perspektivdarstellung von schräg unten dargestellt. Die Vertikalabsätze 4, 5 des in Portalgestalt ausgeführten Achskörpers 1 weisen die Flanken 6, 7 auf, welche jeweils mit dem durch eine Aufnahmenut 8, 9 realisierten integralen Verbindungsglied 8, 9 versehen sind. Die Aufnahmenuten 8, 9 korrespondieren formschlüssig mit den innenseitig der Längslenker 2, 3 vorgesehenen integralen Verbindungsgliedern 10, 11, welche in der hier gezeigten Ausführungsversion durch Einpassprofile 10, 11 gegeben sind.

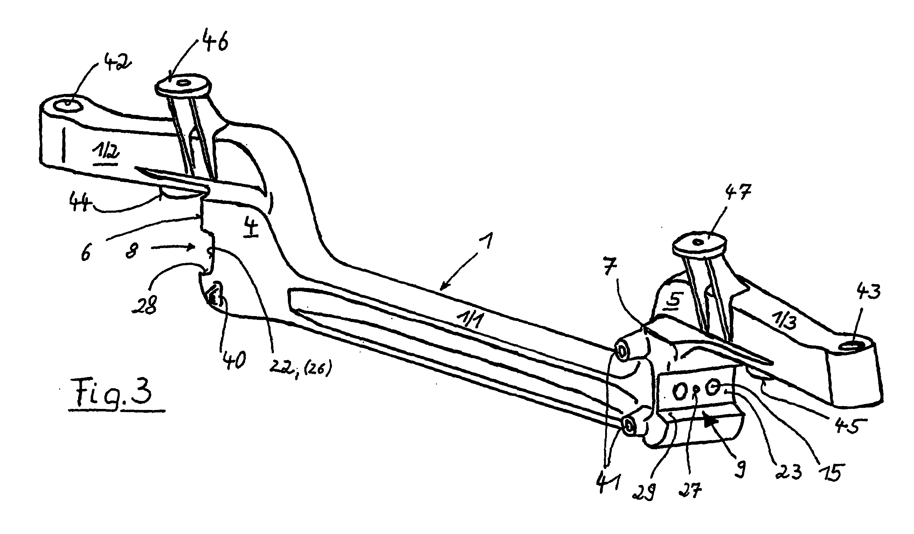

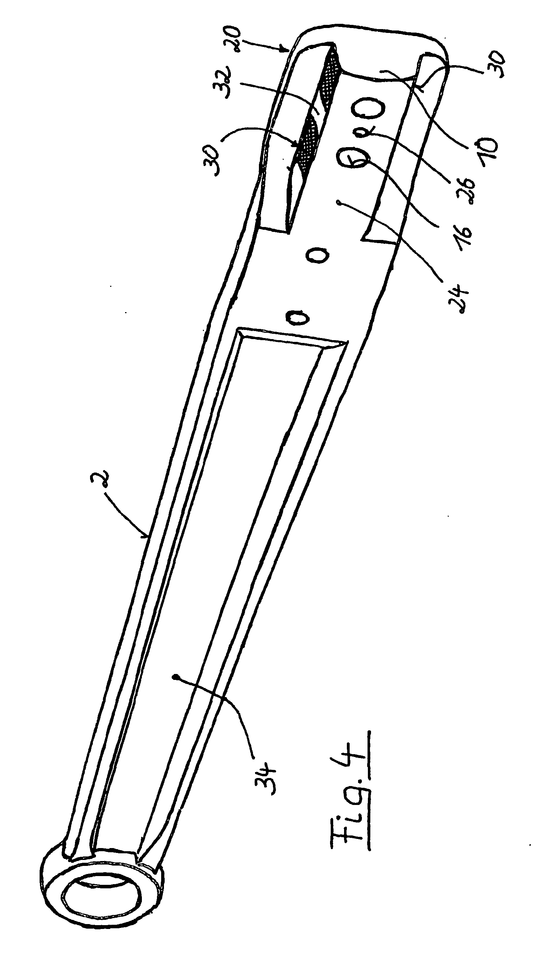

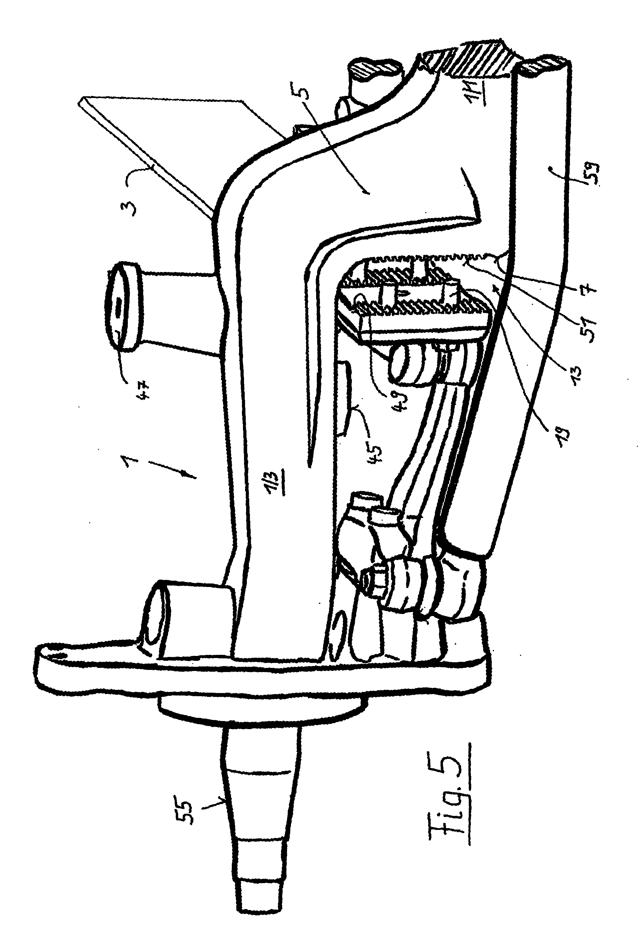

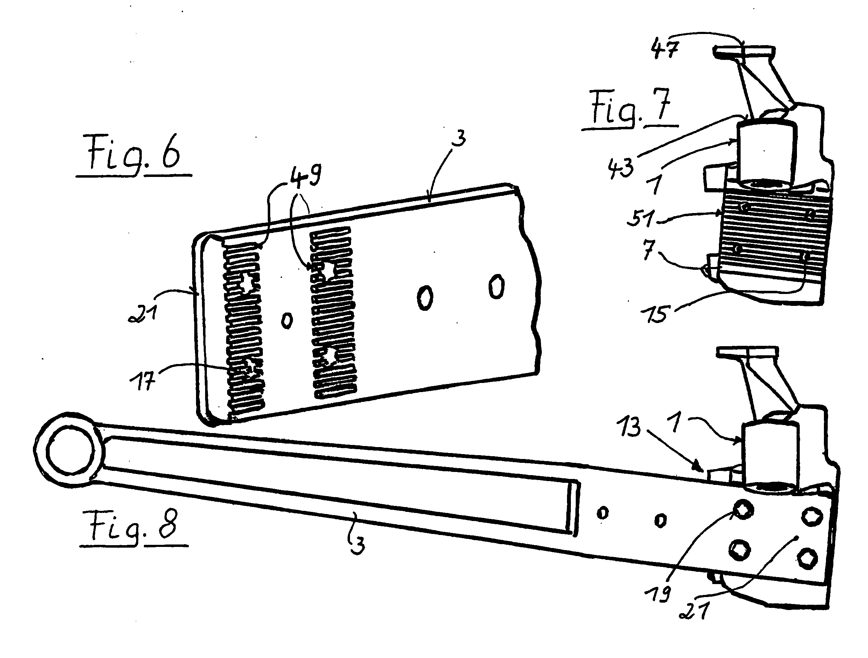

In Fig. 4 ist ein in Fahrtrichtung gesehen rechter Längslenker 2 in perspektivischer Darstellung gezeigt. Der Längslenker 2 ist in seiner Längsrichtung im wesentlichen durch ein Hochkantprofil 34 gegeben. Der achsseitige Endbereich 20 des Längslenkers 2 weist gegenüber seinem Hochkantprofil 34 eine Kröpfung und Verdickung auf, welche fahrzeugeinwärts gerichtet das integrale Verbindungsglied, welches durch ein Einpassprofil 10 gebildet ist, trägt. Das Einpassprofil 10 ist mit einer oberen und einer unteren Anlageflanke 30 versehen, wobei beide Anlageflanken 30 im wesentlichen horizontal verlaufen. Die Anlageflanken 30 des Einpassprofiles 10 korrespondieren formschlüssig mit in Fig. 3 gezeigten Nutflanken 28 der Aufnahmenut 8. Des weiteren weist das Einpassprofil 10 eine Anlagekontur 24 auf, welche mit einem in Fig. 3 gezeigten Nutgrund 22 der Aufnahmenut 8 anliegend korrespondiert. Das Einpassprofil 10 weist in dieser Ausführungsversion zwei horizontal verlaufende Bohrungen 16 zur Aufnahme der den Längsträger 2 mit dem Achskörper 1 lösbar miteinander verbindenden Schraubenverbindungen 18, 19 (Fig. 1, 2) auf. Des weiteren ist eine zusätzliche, zwischen den beiden horizontalen Bohrungen 16 angeordnete Eintiefung 26 gegeben, welche mit einer in Fig. 3 gezeigten, an der Flanke 6 des Achskörpers 1 gegebenen, zusätzlichen Abragung 27 formschlüssig korrespondiert.

In einer hier nicht gezeigten Version können die Aufnahmenuten 8, 9 an den Endbereichen 20, 21 der Längslenker 2, 3 und die Einpassprofile 10, 11 an den Außenflanken 6, 7 des Achskörpers 1 gegeben sein. Die zusätzliche Eintiefung 26 kann ebenfalls an den Außenflanken 6, 7 des Achskörpers 1 und eine zusätzliche, mit der Eintiefung 26 korrespondierende Abragung 27 (Fig. 3) kann an den Einpassprofilen 10, 11 der Längslenker 2, 3 gegeben sein. Alternativ hierzu können diese Eintiefungen 26 und Abragungen 27 ersatzlos entfallen.

In der in Fig. 4 gezeigten Version ist der Verlauf der oberen und unteren Anlageflanke 30 des Längslenkers 2 durch eine Eindrückung 32 unterbrochen. Diese Eindrückung 32 kann
- im Falle der alternativen Anordnung des Einpassprofiles 10, 11 an den Außenflanken 6, 7 des Achskörpers 1 - an diesen Anlageflanken 30 gegeben sein.

In Fig. 5 ist ausschnittsweise in einer perspektivischen Darstellung eine zweite Ausführungsform des Achsverbundes gezeigt. Der den Achsschenkel 55 gelenkig lagernde, gegenüber dem Mittelabschnitt 1/1 niveauhöher angeordnete Endabschnitt 1/3 des Achskörpers 1 übergreift den unterseitig in einem gemeinsamen Überlappungsbereich 19 lösbar befestigten Längslenker 3. Der in dieser Version gezeigte Längslenker 3 weist an seiner der Außenflanke 7 des Vertikalabsatzes 5 des Achskörpers 1 zugewandten Seite als integrales Verbindungsglied 48, 49, 50, 51 untereinander angeordnete Keilvertiefungen (48), 49 auf. Diese korrespondieren formschlüssig mit an der Flanke 7 angeordneten Keilnasen (Keilerhebungen) (50), 51. Alternativ hierzu ist es möglich, die formschlüssig miteinander korrespondierenden integralen Verbindungsglieder 48, 49, 50, 51 dergestalt auf dem Achskörper 1 und den Längslenkern 2, 3 anzuordnen, dass die Keilvertiefungen (48), 49 an den Außenoder Innenflanken 6, 7 des Achskörpers 1 und die Keilnasen (Keilerhebungen) (50), 51 innen- oder außenseitig der Längslenker 2, 3 vorgesehen sind. Die Keilvertiefungen 48, 49 und die Keilnasen (Keilerhebungen) 51 sind in diesem Ausführungsbeispiel in Gruppen zu Keilfeldern zusammengefasst.

Bei der in Fig. 5, 6, 7, 8 gezeigten Ausführungsversion sind innerhalb des Anordnungsbereiches der Keilvertiefungen 49 im Längslenker 3 horizontale Bohrungen 17 (Fig. 6) zur Aufnahme von Schraubverbindungen 19 (Fig. 5) vorgesehen, mittels dieser die Längslenker 3 mit dem Achskörper 1 verbunden werden. Der Achskörper 1 weist an seinen Endabschnitten 1/2 , 1/3 oberseitig Luftfederanbindungen 46, 47 und unterseitig Wagenheberaufnahmen 44, 45 auf.

In Fig. 7 ist der Achskörper 1 in seiner Seitenansicht dargestellt. Die Ausführungsversion des hier gezeigten Achskörpers 1 weist an ihrer Außenflanke 7 die Keilnasen (Keilerhebungen) 51 auf, welche mit den Keilvertiefungen 49 des Längslenkers 3 formschlüssig korrespondieren. Innerhalb der Anordnungsbereiche der Keilnasen (Keilerhebungen) 51 sind in dieser Version vier Bohrungen 15 mit Gewinde vorgesehen, welche mit den im Längslenker 3 angeordneten Bohrungen 17 zwecks Aufnahme der Schraubenverbindungen 19 miteinander korrespondieren.

In Fig. 8 ist in Seitenansicht der mit den wesentlichen Bauteilen ausgestattete Achsverbund gemäß der zweiten Ausführungsform (Fig. 5 bis Fig. 7) dargestellt. Der Längslenker 3 ist hierbei in einem gemeinsamen Überlappungsbereich 13 am Achskörper 1 mittels vier Schraubverbindungen 19 lösbar befestigt.

Unabhängig von der Ausführungsart des Achsverbundes weisen der Achskörper 1 und die Längslenker 2, 3 Vollquerschnitte auf. Der Achskörper 1 und die Längslenker 2, 3 können durch Schmiede- oder Gussteile gefertigt sein.

## Patentansprüche

1. Achsverbund eines Nutzfahrzeuges, mit einem luftgefederten, lenkbare Räder tragenden Achskörper (1), welcher in Fahrzeuglängsrichtung durch Längslenker (2, 3) abgestützt ist, wobei der Achskörper (1) eine Portalgestalt mit je Fahrzeugseite einem Vertikalabsatz (4, 5) aufweist, **dadurch gekennzeichnet, daß** die Flanke (6, 7) der Vertikalabsätze (4, 5) jeweils ein integrales Verbindungsglied (8, 9, 10, 11; 48, 49, 50, 51) aufweist, welches mit jeweils einem am Längslenker (2, 3) vorgesehenen integralen Verbindungsglied (8, 9, 10, 11; 48, 49, 50, 51) in einem gemeinsamen Überlappungsbereich (12, 13) von Achskörper (1) und Längslenker (2, 3) zumindest formschlüssig korrespondiert, wobei im Überlappungsbereich (12, 13) von Achskörper (1) und Längslenker (2, 3) miteinander korrespondierende Bohrungen (14, 15; 16, 17) angeordnet sind, die zur Aufnahme von Achskörper (1) und Längslenker (2, 3) lösbar miteinander verbindender Schraubverbindungen (18, 19) vorgesehen sind.

2. Achsverbund nach Anspruch 1, **dadurch gekennzeichnet, dass** die an Flanke (6, 7) und Längslenker (2, 3) vorgesehenen integralen Verbindungsglieder (8, 9, 10, 11; 48, 49, 50, 51) durch jeweils formschlüssig miteinander korrespondierende Aufnahmenuten (8, 9) und Einpassprofile (10, 11) gegeben sind, die entweder an der Flanke (6, 7) des Achskörpers (1) oder an dem Längslenker (2, 3) ausgebildet sind.

3. Achsverbund nach Anspruch 1, **dadurch gekennzeichnet, dass** die an Flanke (6, 7) und Längslenker (2, 3) vorgesehenen integralen Verbindungsglieder (8, 9, 10, 11; 48, 49, 50, 51) durch jeweils formschlüssig miteinander korrespondierende Keilvertiefungen (48, 49) und Keilnasen (Keilerhebungen) (50, 51) gegeben sind, die entweder an der Flanke (6, 7) des Achskörpers (1) oder an dem Längslenker (2, 3) ausgebildet sind.

4. Achsverbund nach Anspruch 2, **dadurch gekennzeichnet, dass** jede Aufnahmenut (8, 9) des Achskörpers (1) oder der Längslenker (2, 3) in ihrem Nutgrund (22, 23) an einer am Längslenker (2, 3) oder am Achskörper (1) gebildeten Anlagekontur (24, 25) anliegt.

5. Achsverbund nach Anspruch 1 bis 4, **dadurch gekennzeichnet, dass** die Anlagekontur (24, 25) von Achskörper (1) und Längslenker (2, 3) zusätzliche, formschlüssig miteinander korrespondierende Anlageprofile (26, 27) aufweisen, die durch Eintiefungen (26) und Abragungen (27) entweder am Achskörper (1) oder am Längslenker (2, 3) gegeben sind.

6. Achsverbund nach Ansprüche 2 oder 4, **dadurch gekennzeichnet, dass** die Aufnahmenut (8, 9) des Achskörpers (1) oder des Längslenkers (2, 3) horizontal verlaufende Nutflanken (28, 29) aufweist, zwischen diesen eine obere und eine untere Anlageflanke (30, 31) des Längslenkers (2, 3) oder des Achskörpers (1) formschlüssig zur Anlagekommt.

7. Achsverbund nach Anspruch 6, **dadurch gekennzeichnet, dass** der Verlauf der oberen und unteren Anlageflanke (30, 31) des Längslenkers (2, 3) oder des Achskörpers (1) durch wenigstens eine Eindrückung (32) unterbrochen ist.

8. Achsverbund nach einem oder mehreren der vorangegangenen Ansprüche 1 bis 7, **dadurch gekennzeichnet, dass** die Längslenker (2, 3) in ihrer Längsrichtung im wesentlichen durch ein Hohlkantprofil (34) profiliert sind.

9. Achsverbund nach Anspruch 1 bis 8, **dadurch gekennzeichnet, dass** es Endbereiche (20, 21) der Längslenker (2, 3 sind, die am Vertikalabsatz (4, 5) des Achskörpers (1) formschlüssig oder lösbar mittels Schraubverbindungen (18; 19) befestigt sind.

10. Achsverbund nach Anspruch 8, **dadurch gekennzeichnet, dass** die Endbereiche (20, 21) der Längslenker (2, 3) gegenüber den Hochkantprofilen (34) der Längslenker (2, 3) leicht gekröpft und verdickt ausgeführt sind und fahrzeugeinwärts oder fahrzeugauswärts gerichtet die integralen Verbindungsglieder (8, 9, 10, 11; 48, 49, 50, 51) aufweisen.

11. Achsverbund nach Anspruch 8 oder 10, **dadurch gekennzeichnet, dass** an den Hochkantprofilen (34) der Längslenker (2, 3) Stoßdämpferhalter (36, 37) mittels Schraubverbindungen (38, 39) befestigt sind.

12. Achsverbund nach einem oder mehreren der vorangegangenen Ansprüche 1 bis 11, **dadurch gekennzeichnet, dass** der Achskörper (1) und die Längslenker (2, 3) Vollquerschnitte aufweisen, und dass der Achskörper (1) und die Längslenker (2, 3) durch Schmiede- oder Gussteile gegeben sind.

13. Achsverbund nach einem oder mehreren der vorangegangenen Ansprüche 1 bis 12. **dadurch gekennzeichnet, dass** der Achskörper (1) stirnseitig an einer ersten Fahrzeugseite eine Panhardstabanbindung (41) aufweist.

14. Achsverbund nach Anspruch 13, **dadurch gekennzeichnet, dass** der Achskörper stirnseitig an einer zweiten Fahrzeugseite eine Wegsensoranbindung (40) aufweist.

15. Achsverbund nach einem oder mehreren der vorangegangenen Ansprüche 1 bis 14, **dadurch gekennzeichnet, das** der Achskörper (1) endseitig jeweils eine Achsschenkelaufnahme (42. 43) und eine Wagenheberaufnahme (44, 45) aufweist.

16. Achsverbund nach einem oder mehreren der vorangegangenen Ansprüche 1 bis 15, **dadurch gekennzeichnet, dass** der Achskörper (1) endseitig jeweils eine oberseitig an diesem angeordnete Luftfederanbindung (46, 47) aufweist.

17. Achsverbund nach einem oder mehreren der vorangegangenen Ansprüche 1 bis 16, **dadurch gekennzeichnet, dass** der Achskörper (1) in seinem Mittelabschnitt (1/1) niveautiefer als in seinen Endabschnitten (1/2, 1/3) ausgeführt ist, und dass die die Verbindungsglieder (8, 9, 10, 11; 48, 49, 50, 51) zumindest teilweise bildenden Flanken (6, 7) entweder fahrzeugaußenseitig oder fahrzeuginnenseitig des Vertikalabsatzes (4, 5) des Achskörpers (1) angeordnet sind.

18. Achsverbund nach einem oder mehreren der vorangegangenen Ansprüche 1 bis 17, **dadurch gekennzeichnet, dass** der Achskörper (1) im Bereich seiner Endabschnitte (1/2, 1/3) von den Längslenkern (2, 3) untergriffen ist.

## Claims

1. Axle set-up in a commercial vehicle, with an air-sprung axle body (1) carrying steerable wheels, which axle set-up is supported in longitudinal direction by longitudinal arms (2, 3), whereby the axle body (1) has a portal design with a vertical step (4, 5) on each side of the vehicle, **characterised in that** the flank (6, 7) of each vertical step (4, 5) features an integral connecting element (8, 9, 10, 11; 48, 49, 50, 51) which at least positively corresponds with an integral connecting element (8, 9, 10, 11; 48, 49, 50, 51), provided on each longitudinal arm (2, 3), in a common overlapping area (12, 13) of axle body (1) and longitudinal arm (2, 3), whereby bores (14, 15; 16, 17) corresponding with one another are arranged in said overlapping area (12, 13) of axle body (1) and longitudinal arm (2, 3) and designed for the insertion of bolted connections (18, 19) which removably connect the axle body (1) and the longitudinal member (2).

2. Axle set-up according to Claim 1, **characterised in that** the integral connecting elements (8, 9, 10, 11; 48, 49, 50, 51) on the flank (6, 7) and longitudinal arm (2, 3) are provided in the form of support grooves (8, 9) and fitting sections (10, 11) which positively correspond with one another and are provided either on the flank (6, 7) of the axle body (1) or on the longitudinal arm (2, 3).

3. Axle set-up according to Claim 1, **characterised in that** the integral connecting elements (8, 9, 10, 11; 48, 49, 50, 51) on the flank (6, 7) and longitudinal arm (2, 3) are provided in the form of wedge-type recesses (48, 49) and wedge-type lugs (wedge-type protrusions) (50, 51) which positively correspond with one another and are provided either on the flank (6, 7) of the axle body (1) or on the longitudinal arm (2, 3).

4. Axle set-up according to Claim 2, **characterised in that** the groove bottom (22, 23) of each support groove (8, 9) of the axle body (1) or the longitudinal arm (2, 3) contacts a contact contour (24, 25) provided on the longitudinal arm (2, 3) or on the axle body (1).

5. Axle set-up according to Claims 1 to 4, **characterised in that** the contact contours (24, 25) on the axle body (1) and longitudinal arm (2, 3) feature additional contact sections (26, 27) which positively correspond with one another and are provided in the form of recesses (26) and protrusions (27) either on the axle body (1) or on the longitudinal arm (2, 3).

6. Axle set-up according to Claim 2 or 4, **characterised in that** the support groove (8, 9) on the axle body (1) or longitudinal arm (2, 3) features horizontal groove flanks (28, 29), whereby an upper and a lower contact flank (30, 31) on the longitudinal arm (2, 3) or on the axle body (1) can be brought into positive contact between said groove flanks (28, 29).

7. Axle set-up according to Claim 6, **characterised in that** the upper and lower contact flanks (30, 31) on the longitudinal arm (2, 3) or axle body (1) are interrupted by at least one indent (32).

8. Axle set-up according to one or several of the foregoing Claims 1 to 7, **characterised in that** in their longitudinal direction the longitudinal arms (2, 3) are basically **characterised by** an upright section (34).

9. Axle set-up according to Claims 1 to 8, **characterised in that** it is the end areas (20, 21) of the longitudinal arms (2, 3) which are fastened to the vertical step (4, 5) on the axle body (1) positively or removably by means of bolted connections (18; 19).

10. Axle set-up according to Claim 8, **characterised in that** compared with the upright sections (34) of the longitudinal arms (2, 3) the end areas (20, 21) of the longitudinal arms (2, 3) are slightly dropped, are designed thicker, are turned vehicle-inwards or vehicle-outwards and feature the integral connecting elements (8, 9, 10, 11; 48, 49, 50, 51).

11. Axle set-up according to Claim 8 or 10, **characterised in that** shock absorber brackets (36, 37) are fastened to the upright sections (34) of the longitudinal arms (2, 3) by means of bolted connections (28, 39).

12. Axle set-up according to one or several of the foregoing Claims 1 to 11, **characterised in that** the axle body (1) and the longitudinal arms (2, 3) feature solid cross-sections and that the axle body (1) and the longitudinal arms (2, 3) are provided in the form of forged or cast parts.

13. Axle set-up according to one or several of the foregoing Claims 1 to 12, **characterised in that** on a first vehicle side the front face of the axle body (1) features a Panhard rod attachment (41).

14. Axle set-up according to Claim 13, **characterised in that** on a second vehicle side the front face of the axle body (1) features an excursion sensor attachment (40).

15. Axle set-up according to one or several of the foregoing Claims 1 to 14, **characterised in that** each end face of the axle body (1) features a steering knuckle support (42, 43) and a jacking point (44, 45).

16. Axle set-up according to one or several of the foregoing Claims 1 to 15, **characterised in that** the top side of each end face of the axle body (1) features an air-spring attachment (46, 47).

17. Axle set-up according to one or several of the foregoing Claims 1 to 16, **characterised in that** the centre portion (1/1) of the axle body (1) is at a lower level than the end sections (1/2, 1/3) of said axle body (1) and that the flanks (6, 7) which at least partially form the connecting elements (8, 9, 10, 11; 48, 49, 50, 51) are arranged either on the vehicle-outward- or vehicle-inward-facing side of the vertical step (4, 5) on the axle body (1).

18. Axle set-up according to one or several of the foregoing Claims 1 to 17, **characterised in that** in the area of its end sections (1/2, 1/3) the longitudinal arms (2, 3) pass under the axle body (1).

## Revendications

1. Assemblage d'essieu de véhicule industriel avec corps d'essieu (1) portant les roues directrices à suspension pneumatique, en appui avec des bras longitudinaux (2, 3) placé dans le sens longitudinal du véhicule, auquel cas le corps d'essieu (1) présente sur chaque côté du véhicule un décrochement vertical (4, 5), **caractérisé en ce que** les flans (6, 7) des décrochements verticaux (4, 5) présentent à chaque fois des éléments de raccordement complets (8, 9, 10, 11 ; 48, 49, 50, 51), qui correspondent avec les éléments de raccordement complets (8, 9, 10, 11 ; 48, 49, 50, 51) prévus sur les bras longitudinaux (2, 3) dans une zone de chevauchement commune (12, 13) du corps d'essieu (1) et des bras longitudinaux (2, 3) au moins par adhérence, auquel cas des alésages (14, 15, 16, 17) correspondant les uns avec les autres respectivement sur le corps d'essieu (1) et les bras longitudinaux (2,3) dans la zone de chevauchement sont prévus pour fixer le corps d'essieu (1) et les bras longitudinaux (2, 3) par des boulonnages (18, 19) desserrables.

2. Assemblage d'essieu selon la revendication 1, **caractérisé en ce que** les éléments de raccordement complets (8, 9, 10, 11 ; 48, 49, 50, 51) prévus sur les flans (6, 7) et les bras longitudinaux (2, 3) sont constitués de rainures de réception (8, 9) et de profilés d'emboîtement (10, 11) montés soit sur le flan (6, 7) du corps d'essieu (1), soit sur le bras longitudinal (2, 3).

3. Assemblage d'essieu selon la revendication 1, **caractérisé en ce que** les éléments de raccordement complets (8, 9, 10, 11 ; 48, 49, 50, 51) prévus sur les flans (6, 7) et les bras longitudinaux (2, 3) sont constitués des évidements cannelés (48, 49) et des éléments d'emboîtement (50, 51) montés soit sur le flan (6, 7) du corps d'essieu (1), soit sur le bras longitudinal (2, 3).

4. Assemblage d'essieu selon la revendication 2, **caractérisé en ce que** chaque rainure de réception (8, 9) du corps d'essieu (1) ou des bras longitudinaux (2, 3) est en appui au niveau de sa base (22, 23) sur le contour d'appui défini (24, 25) sur le bras longitudinal (2, 3) ou le corps d'essieu.

5. Assemblage d'essieu selon les revendications 1 à 4, **caractérisé en ce que** le contour d'appui (24, 25) du corps d'essieu (1) et des bras longitudinaux (2, 3) présente des profilés d'appui supplémentaires (26, 27), correspondant les uns aux autres par adhérence, sous la forme d'évidements (26) et de saillies (27) sur le corps d'essieu (1) ou sur le bras longitudinal (2, 3).

6. Assemblage d'essieu selon la revendication 2 ou 4, **caractérisé en ce que** la rainure de réception (8, 9) du corps d'essieu (1) ou du bras longitudinal (2, 3) présente des flancs horizontaux (28, 29) entre lesquels vient en appui sur un flan de montage supérieur ou inférieur (30, 31) du bras longitudinal (2, 3) ou du corps d'essieu (1) par adhérence.

7. Assemblage d'essieu selon la revendication 6, **caractérisé en ce que** la ligne des flancs d'appui supérieurs et inférieurs (30, 31) du bras longitudinal (2, 3) ou du corps d'essieu (1) est brisée par au moins une échancrure (32).

8. Assemblage d'essieu selon une ou plusieurs revendications précédentes 1 à 7, **caractérisé en ce que** les bras longitudinaux (2, 3) sont profilés dans leur longueur pour l'essentiel par un profilé à face concave (34).

9. Assemblage d'essieu selon les revendications 1 à 8, **caractérisé en ce que** les extrémités (20, 21) des bras longitudinaux (2, 3) sont fixées sur les décrochements verticaux (4, 5) du corps d'essieu (1) par adhérence ou de manière desserrable à l'aide de boulonnages (18, 19).

10. Assemblage d'essieu selon la revendication 8, **caractérisé en ce que** les extrémités (20, 21) des bras longitudinaux (2, 3) sont placées légèrement coudées et épaissies face aux profils à face concave (34) des bras longitudinaux (2, 3) et présentent des éléments de raccordement complets (8, 9, 10, 11 ; 48, 49, 50, 51), orientés vers l'intérieur ou l'extérieur du véhicule.

11. Assemblage d'essieu selon la revendication 8 ou 10, **caractérisé en ce que** les supports d'amortisseurs (36, 37) sont fixés aux profils à face concave (34) des bras longitudinaux (2, 3) à l'aide de boulonnages (38, 39).

12. Assemblage d'essieu selon une ou plusieurs des revendications précédentes 1 à 11, **caractérisé en ce que** le corps d'essieu (1) et les bras longitudinaux (2,3) présentent des sections pleines et **en ce que** le corps d'essieu (1) et les bras longitudinaux sont formés par des pièces forgées ou en fonte.

13. Assemblage d'essieu selon une ou plusieurs des revendications précédentes 1 à 12, **caractérisé en ce que** le corps d'essieu (1) présente une fixation de barre Panhard (41) à l'avant sur un premier côté du véhicule.

14. Assemblage d'essieu selon la revendication 13, **caractérisé en ce que** le corps d'essieu (1) présente une fixation de capteur de déplacement (40) à l'avant d'un deuxième côté du véhicule.

15. Assemblage d'essieu selon une ou plusieurs des revendications précédentes 1 à 14, **caractérisé en ce que** le corps d'essieu (1) présente à chaque extrémité un support de fusée de roues (42, 43) et un support de cric (44, 45).

16. Assemblage d'essieu selon une ou plusieurs des revendications précédentes 1 à 15, **caractérisé en ce que** le corps d'essieu (1) présente à chaque extrémité une liaison pour suspension pneumatique (46, 47) disposée sur la partie supérieure de celui-ci.

17. Assemblage d'essieu selon une ou plusieurs des revendications précédentes 1 à 16, **caractérisé en ce que** le corps d'essieu (1) est exécuté dans sa section médiane (1/1) plus bas de niveau que dans ses segments d'extrémité (1/2, 1/3) et **en ce que** les flancs (6, 7) constituant au moins partiellement les éléments de raccordement (8, 9, 10, 11 ; 48, 49, 50, 51) sont disposés soit vers l'intérieur, soit vers l'extérieur du véhicule des décrochements verticaux (4, 5) du corps d'essieu (1).

18. Assemblage d'essieu selon une ou plusieurs des revendications précédentes 1 à 17, **caractérisé en ce que** le corps d'essieu (1) est chevauché par les bras longitudinaux (2, 3) au niveau de ses segments d'extrémité (1/2, 1/3).
